# NEUE EUROPÄISCHE PATENTSCHRIFT

(11) **EP 1 096 457 B2**
(45) Veröffentlichungstag und Bekanntmachung des Hinweises auf die Entscheidung über den Einspruch: **12.12.2007**
(45) Hinweis auf die Patenterteilung: 25.02.2004
(21) Anmeldenummer: 00120194.6
(22) Anmeldetag: 22.09.2000
(51) Int. Cl.: G08G 1/0967, G08G 1/04, B60K 31/00

(54) **Verfahren und Einrichtung zur elektronischen Erkennung von Verkehrszeichen**
Method and device for electronic recognition of traffic road signs
Procédé et dispositif de reconaissance électronique de panneaux de signalisation routière

(30) Priorität: 29.10.1999 DE 19952153
(43) Veröffentlichungstag der Anmeldung: 02.05.2001
(73) Patentinhaber: Volkswagen Aktiengesellschaft, 38436 Wolfsburg (DE)
(72) Erfinder: Mai, Rudolf, 38442 Wolfsburg (DE); Bergholz, Ralf, Dr., 38108 Braunschweig (DE); Leemann, Christoph, 85051 Ingolstadt (DE); Bleck, Uwe, 85055 Ingolstadt (DE)
(74) Vertreter: Meyer, Enno

(56) Entgegenhaltungen:
- CN-A- 1 218 335
- DE-A1- 19 701 370
- DE-U1- 29 802 953
- JP-A- 7 085 400
- US-A- 5 901 806
- ULMER B: "VITA-an autonomous road vehicle (ARV) for collision avoidance in traffic" PROCEEDINGS OF THE INTELLIGENT VEHICLES '92 SYMPOSIUM (CAT. NO.92TH0468-9), DETROIT, MI, USA, 29 JUNE-1 JULY 1992, Seiten 36-41, XP002180382 1990, New York, NY, USA, IEEE, USA ISBN: 0-7803-0747-X
- ULMER B: "VITA II-active collision avoidance in real traffic" PROCEEDINGS OF THE INTELLIGENT VEHICLES '94 SYMPOSIUM (CAT. NO.94TH8011), PROCEEDINGS OF THE INTELLIGENT VEHICLES '94 SYMPOSIUM, PARIS, FRANCE, 24-26 OCT. 1994, Seiten 1-6, XP002180383 1994, New York, NY, USA, IEEE, USA ISBN: 0-7803-2135-9

## Beschreibung

Die Erfindung betrifft ein Verfahren sowie eine Einrichtung zur elektronischen Erkennung von Verkehrszeichen, bei welchem die Verkehrszeichen mit einer im Kraftfahrzeug angeordneten elektronischen Kamera erfaßt und über Mustervergleichsverfahren elektronisch gedeutet und im Kraftfahrzeug angezeigt werden und/oder auf die automatische Geschwindigkeitsregelung des Kraftfahrzeuges einwirken, gemäß Oberbegriff der Patentansprüche 1 und 3.

Verfahren und Einrichtungen zur automatischen Verkehrszeichenerkennung sind bereits vielfach bekannt. Wenngleich die meisten der bekannten Verfahren in der Praxis noch nicht angewendet werden, so wird doch mit Hochdruck an einer funktionstauglichen, d.h. unter allen Bedingungen alltagstauglichen Realisierung gearbeitet. Dies liegt zum einen daran, daß Verfahren und Einrichtungen der bekannten Art entweder technisch zu aufwendig sind, oder aber nicht in dem Maße funktionstüchtig, wie es wünschenswert oder sogar notwendig wäre. Der hier im Vordergrund stehende Gemeinnutz soll dabei nicht nur auf eine Erhöhung der Komfortabilität gegründet sein, sondern Systeme dieser Art sollen den Verkehrsfluß zum Wohle aller optimieren helfen. Insbesondere bei der Stauprävention ist das Ziel, die Fahrzeuge im gleichmäßigen Fahrfluß zu halten. Psycholgische Verhaltensweisen jedoch führen bekanntermaßen zu einem oszillierenden Verkehrsfluß. Dieser liegt darin begründet, daß sich nicht alle Verkehrsteilnehmer gleich verhalten, gleich reagieren, oder gleiche Reaktionsmuster haben. Diese Unterschiedlichkeit führt bspw. schon bei einer trivialen Situation, wie dem Anfahren im Stau dazu, daß jeder mit einem anderen Abstand zum Vordermann anfährt und mehr oder weniger zügig aufschließt. Die Autoschlange kann sich also sowohl im Stau als auch bei zähfließendem. Verkehr nicht gleichförmig bewegen, solange nicht automatisch gleichförmig geregelt wird.

Um eine Verkehrssituation aber als ganzes erfassen und deuten zu können, bedarf es auch einer elektronischen Erkennung von Verkehrszeichen, sowie auch anderer Gegebenheiten. Der Raum vor dem Fahrzeug läßt sich durch elektronische Kameras erfassen, so daß die sensorische Erfassung, egal ob über Codeübermittlung oder über Bilderfassung zunächst kein Problem darstellt. Dies betrifft jedoch nur die Erfassung der Umgebung als solches. Problematischer wird die Deutung der Verkehrszeichen immer dann, wenn ihre Erkennung nicht in die abgespeicherten Muster paßt, oder aber Verkehrsgegebenheiten wie Teilabdeckungen oder aber auch Abdeckungen durch Sträucher oder Äste von Bäumen eine Auswertung erschweren. Diese Fälle sind im Stand der Technik bisher wenig beachtet, spielen aber im Alltag eine große Rolle.

Aus der DE 296 10 677 U1 ist ein Bilderfassungsgerät zur optischen Abtastung/Erkennung von am Straßenrand aufgestellten Verkehrsschildern durch Mustervergleich bekannt, wobei die erfaßten Bilddaten innerhalb des Kraftfahrzeuges in entsprechender Weise angezeigt werden. Hierbei ist es bereits wichtig, daß die Verkehrsschilder an der erwarteten Stelle am Straßenrand aufgestellt werden, weil das Bilderfassungsgerät ansonsten Schwierigkeiten mit der Abtastung hätte.

Aus der DE 298 02 953 U1 ist eine permanente optische Abtastung des rechten Fahrbahnrandes durch Videokamera bekannt. Die so erfaßten Daten werden an einen Rechner im Kraftfahrzeug übermittelt. Innerhalb des Rechners erfolgt eine Auswertung der erfaßten Bilddaten, ggf. nach Mustern und das Ermittlungsergebnis wird visuell und/oder akustisch im Fahrzeug angezeigt.

Aus der DE 295 20 819 U1 ist eine geschwindigkeitsbegrenzende Einrichtung bekannt, welche mit einer Codeerkennung von Verkehrszeichen arbeitet. Hierbei werden die Verkehrszeichen nicht optisch erfaßt, sondern jedes Verkehrszeichen ist mit einer Codierung versehen, die innerhalb des Kraftfahrzeuges beim Passieren derselben erfaßt werden kann. Die so ermittelten Bedeutungsinhalte der Verkehrszeichen werden innerhalb des Fahrzeuges logisch umgesetzt und einer geschwindigkeitsbegrenzenden Eingriffnahme auf die Steuerung des Fahrzeuges zugeleitet.

Aus der DE 36 19 824 C2 ist ein Bildsensor bekannt, welcher Bilddaten aus unterschiedlichen Blickrichtungen liefert. Die Summe aller Bilddaten wird gesammelt und in Verbindung mit Verkehrszeichenerkennungen werden Höchstgeschwindigkeitssollwerte ermittelt, die dann innerhalb des Fahrzeuges angezeigt werden.

Aus der JP 07 085400 A ist ein Verfahren bekannt, in welchem elektronisch Verkehrszeichen erkannt werden, und diese automatische Erkennung mit der Geschwindigkeitsbeinflussung im Kraftfahrzeug korreliert wird. Dabei findet gleichzeitig auch die elektronische Distanzregelung Einfluss in das Verfahren.
Hierbei ist das Verfahren streng taktisch ausgelegt und reagiert nur auf momentane Situationen, und somit nicht vorausschauend.

Aus dem Aufsatz ULMER B, "Vita an autonomous road vehicle for collision avoidance in traffic", Proceedings of the intelligent vehicles, 92, symposium, Detroit, Mi, USA, 29 June-1July 1992, Seite 36 bis 41, ist ferner ein Verfahren bekannt, bei welchem mit den bereits in der JP 07 085400 A genannten Maßnahmen eine Kollisionsverhinderung gesteuert wird. Hierbei wird bestimmungsgemäß mit taktischem Regelziel gearbeitet.

CN 1218335A zeigt ein System zum automatischen Fahren eines Kraftfahrzeugs, bei dem die Möglichkeit angesprochen wird, ein Fahrerasssistenzsystem mit einem Navigationssystem zu kombinieren.

DE 197 01 370 A1 beschreibt ein Verfahren zur Erweiterung von in einem Navigationssystem eines Kraftfahrzeugs abgespeicherten Daten eines Straßennetzes, wobei das Kraftfahrzeug eine Einrichtung enthält, mittels der zusätzlichen Daten des Straßennetzes während der Fahrt des Kraftfahrzeugs aufgenommen und abgespeichert werden.

Die allgemeine Problematik ist, wie oben dargestellt, daß eine Verkehrszeichenerfassung und Deutung als solche zwar notwendig aber nicht hinreichend ist, um auch den Verkehrsfluß zu optimieren.
Der Erfindung liegt somit die Aufgabe zugrunde, ein Verfahren sowie eine Einrichtung zur Verkehrszeichenerkennung dahingehend zu erweitern, daß eine deutlich bessere Verkehrsführung bei gleichzeitiger Erhöhung der Fahrsicherheit und des Fahrkomforts gewährleistet ist.

Die gestellte Aufgabe wird bei einem Verfahren der gattungsgemäßen Art erfindungsgemäß durch die kennzeichnenden Merkmale des Patentanspruches 1 gelöst.

Vorteilhafte Ausgestaltungen des erfindungsgemäßen Verfahrens sind in den Ansprüchen 2-3 angegeben.

Hinsichtlich einer Einrichtung der gattungsgemäßen Art ist die gestellte Aufgabe erfindungsgemäß durch die kennzeichnenden Merkmale des Patentanspruches 4 gelöst.

Weitere vorteilhafte Ausgestaltungen sind in den übrigen Ansprüchen angegeben.

In verfahrensgemäßer Hinsicht besteht der Kern der Erfindung darin, die elektronische Verkehrszeichenerkennung mit einer automatischen Distanzregelung ADR sowie einer automatischen Notbremsbetätigung ANB zu verbinden, wobei dann nicht nur ein automatischer Eingriff auf die Beschleunigung und Verzögerung des Fahrzeuges gegeben ist, sondern zusätzlich zur Verkehrszeichenerkennung noch verifiziert wird, ob die erkannte Geschwindigkeit aufgrund vorausfahrender Fahrzeuge oder Hindernisse überhaupt ausgeführt werden kann. Bei ähnlichen Systemen ohne ADR oder ANB unterliegt diese Verifizierung dem Fahrereingriff. Da in den meisten Situationen dieser Fahrereingriff notwendig ist, ist die reine Verkehrszeichenerkennung nur eingeschränkt wirkungsvoll. Insofern ist die praktische Wirkung des erfindungsgemäßen Verfahrens nunmehr erheblich verbessert Diese Form der Fahrerassistenz bewirkt nicht nur eine enorme Erhöhung des Fahrkomforts, sondern auch eine enorme Erhöhung der Verkehrssicherheit und der Flüssighaltung des Straßenverkehrs.

Bei einer großen allgemeinen Verbreitung dieses Verfahrens führt dies zu einem vergleichmäßigten Anfahr- und Bremsverhalten der verkehrsbeteiligten Kraftfahrzeuge. Dies wiederum erhöht die Sicherheit und ist des weiteren ein wesentlicher Schritt auf dem Weg zu einer möglicherwiese zukünftigen automatischen Verkehrsführung.

Mit automatischer Distanzregelung ist nicht nur die reine Messung des Abstandes zu vorausfahrenden Fahrzeugen gemeint, sondern die Verbindung von Distanzmessung, Relativgeschwindigkeitsbestimmung und somit vorausschauende Bewertung der Situation und rechtzeitiger automatischer Beschleunigungs- oder Bremseingriff. Da das ADR-System ein Regelsystem ist, läßt es die Situation sicherheitsmäßig nicht zuspitzend laufen und reagiert dann mit einer Notbremse, sondern es wird wie oben bereits ausgeführt vorausschauend und somit frühzeitig eingegriffen. Der Eingriff ist dabei jedoch nicht so, daß es wiederum zu einer verkehrsbehindernden Tendenz käme, sondern auch in der Ausschöpfung der Sicherheitsreserven, ohne an Grenzbereiche zu gehen ist das System optimiert.

Weiterhin vorteilhaft ist die manuelle Eingriffmöglichkeit durch den Fahrzeugführer. Hierdurch gewinnt der Fahrzeugführer die Möglichkeit, daß bei völlig unklärbarer Situation er selbst eingreifen kann oder aber, daß die Möglichkeit besteht, in Notfallreaktionen anders reagieren zu können, als es die Beschilderung oder die erkannte und gedeutete Situation vorgäbe.

In weiterer vorteilhafter Ausgestaltung ist angegeben, daß die Verfahrensweise angereichert sein kann mit Navigationsdaten aus bekannten Navigationssystemen. Hierbei wird die besagte erfindungsgemäße Verfahrensweise kombiniert mit der elektronisch hinterlegten Straßenkarte in Navigationssystemen. Hierdurch können Verkehrssituationen entweder insgesamt geklärt werden, die sich auch aus der weiteren Straßenführung ergeben oder aber Verkehrszeichen, die bereits zur besagten Strecke abgespeichert sind, können hier abgerufen oder ggf. der Situation auch aktualisiert angepasst werden.

Durch die elektronischen Streckendaten kommt ein wesentlicher Aspekt hinzu. Zusätzlich zur Erkennung der Verkehrsgebote und Verbote durch die elektronische Verkehrszeichenerkennung werden nunmehr prädiktive Streckendaten hinzugefügt. Das System weiß dadurch also nicht nur die momentane Situation zu deuten, sondern weiß bereits wie die Straßenführung weitergeht. Sind die Navigationsdaten vorhanden, so können natürlich diese auch mit den erfassten Verkehrszeichen und der ermittelten Verkehrssituation angereichert werden. Diese Daten, wie bspw. Staudaten, Verkehrsflußdaten, bspw. daß der Verkehrsfluß lokal unterhalb des angegebenen Tempolimits liegt, können mit Hilfe des Navigationssystems ortsbezogen abgespeichert werden. Diese Daten können dann entweder im betreffenden Kraftfahrzeug und ausschließlich für den eigenen Nutzen abgespeichert werden, oder aber sie können auch dem Allgemeinnutzen zur Verfügung gestellt werden. Im erstgenannten Fall dient dies zur Verbesserung der Fahrerassistenz beim Wiederbefahren derselben Strecke oder der gleichen Strecke in Gegenrichtung.

In weiterer vorteilhafter Ausgestaltung der erfindungsgemäßen Verfahrensweise ist angegeben, daß das System in ein Autopilotsystem eingebunden sein kann. Hierbei sind verschiedene Autopilotsysteme denkbar. Zum einen Systeme, die mit Drahtschleifen und Leitstrahlen arbeiten, oder Systeme, die freiformuliert fahren, also durch optische elektronische Erfassung der Umgebung und der Verkehrssituation.

Eine weitere vorteilhafte Ausgestaltung besteht darin, das System insgesamt, wie oben beschrieben, adaptiv auszugestalten. D.h. das System speichert alle Situationsdaten und die entsprechend daraufhin ausgelösten Betätigungen, und kann so das Fahrerverhalten lernen und es in anderen Situationen präzise nachbilden. Das System kann jedoch auch in dem Sinne adaptiv sein, daß Situationsdaten lokal zugeordnet abgespeichert werden, und bei Wiederbefahrung der Strecke die Notwendigen Betätigungen oder Steuerungsverhaltensweisen dann bereits sozusagen prädiktiv bekannt sind.

Eine Einrichtung dieser Art, die sich zur Durchführung des erfindungsgemäßen Verfahrens eignet, enthält zusätzlich ein automatisches Distanzregelungssystem ADR und ein automatisches Notbremssystem ANB. Die logische Verschaltung ist dabei jedoch derart, daß ein regelnder Eingriff auf die Ausführbarkeit der Verkehrszeichen über eine Abstandsmessung verifiziert wird. D.h. erfindungsgemäß dient die Einbindung von ADR und ANB nicht dazu, die elektronisch erkannte Geschwindigkeitsbegrenzung umzusetzen, sondern die Umsetzbarkeit der angegebenen Geschwindigkeit bei erkannter Verkehrssituation.

In weiterer erfindungsgemäßer Ausgestaltung ist vorgeschlagen, daß die Navigationseinrichtung logisch sowohl mit der elektronischen Verkehrszeichenauswerteeinheit als auch mit dem ADR- und ANB-System verschaltet ist. Dadurch ist es möglich, sowohl erkannte Verkehrszeichen als auch örtliche Gegebenheiten mit Hilfe des Navigationssystems örtlich zuordnen zu können. Dies ist bei Wederbefahrung der Strecke, sowie auch im Hinblick auf Datenverfügbarkeit durch die Allgemeinheit von großem Vorteil. Um diese korrelierte Zuordnung auch realisieren zu können, ist die logische Verschaltung von Navigationssystem und Verkehrszeichenauswerteeinheit und ADR-/ANB-System informationsmäßig bidirektional.

In weiterer vorteilhafter Ausgestaltung ist die Verkehrszeichenauswerteeinheit sowie das ADR-/ANB-System mit jeweils einer Speichereinheit versehen.

Die Einzelelemente des Systems sind dabei modular aufgebaut. Dieses Baukastensystem hat den Vorteil, daß das System in verschiedenen Ausbaustufen bereits funktionstüchtig sein kann. Das System ist nachrüstbar und letztendlich hat es auch herstellungstechnische Vorteile. Je nach gewünschter Ausstattung ist das System mit denjenigen Komponenten versehen, die den Ausstattungswünschen entsprechen. Ist eine andere Ausstattung gewünscht, dann muß die Basisausstattung nur um die entsprechenden Module ergänzt werden.

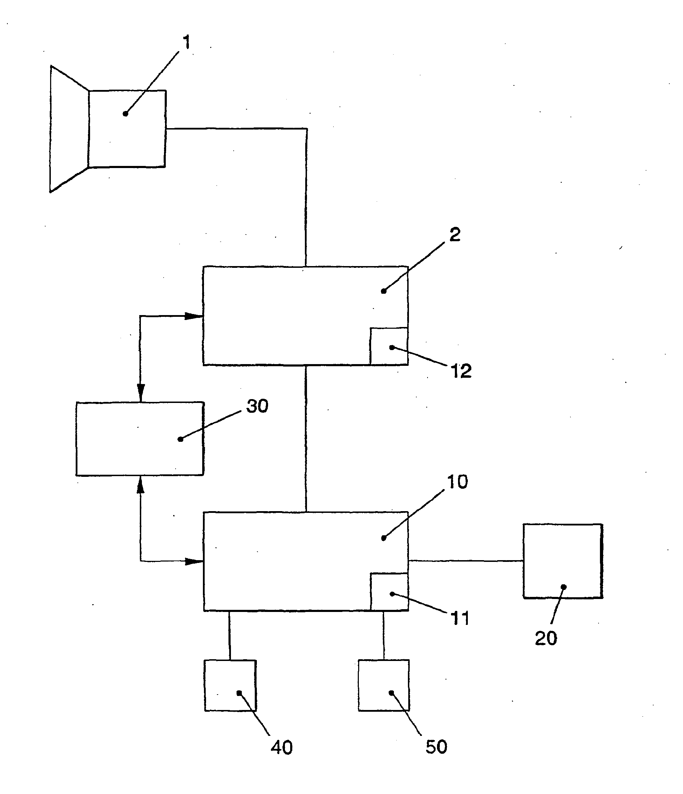

Die Erfindung ist in der Zeichnung dargestellt und nachfolgend näher beschrieben.

Die Abbildung zeigt die Realisierung des erfindungsgemäßen Gedankens sowohl in verfahrensmäßiger als auch in einrichtungsmäßiger Art.
Übergeordnet und als wichtiger Ausgangspunkt ist eine Kamera 1 vorgesehen, mit welcher die Verkehrszeichen erfasst werden können. Diese ist in einem nicht weiter dargestellten Fahrzeug in entsprechender Weise im vorderen Bereich, entweder hinter der Windschutzscheibe oder im Bereich der Scheinwerferanordnungen, montiert. Die Kamera 1 ist dabei logisch mit der Verkehrszeichenauswerteeinheit 2 verschaltet, in welcher die Kamerabilddaten zur Verkehrszeichenerkennung ausgewertet werden. Der Verkehrszeichenauswerteeinheit 2 ist die automatische Distanzregel- und Notbremseinrichtung ADR und ANB 10 nachgeschaltet. Innerhalb der Verkehrszeichenauswerteeinheit 2 werden, wie oben bereits gesagt, durch Mustervergleichsverfahren die mit der Kamera 1 erfassten Bilddaten ausgewertet, und die entsprechenden Verkehrszeichen gedeutet. Die entsprechenden Muster, also die bereits vorhandenen und die adaptiv erlernten neuen Muster werden in der Speichereinheit 12 der Verkehrszeichenauswerteeinheit 2 gespeichert.

Innerhalb des ADR-/ANB-systems 10 ist ebenfalls eine weitere Speichereinheit 11 angeordnet. Innerhalb dieser Speichereinheit werden ADR- und ANB -relevante Daten abgespeichert. Dies sind in der Regel Distanzwerte zu vorausfahrenden oder auch nachfolgenden Fahrzeugen, in Verbindung mit den hierzu erzeugten Stellgrößen für die elektrische Bremse 50 und die elektrische Gaspedalbetätigung 40.

Die Navigationseinheit 30 ist informationstechnisch, wie oben bereits gesagt, sowohl mit dem ADR-/ANB-System 10 als auch mit derVerkehrszeichenerkennung 2 verschaltet. Dadurch ist es möglich, die erkannten Verkehrszeichen, sowie die Distanzdaten, ebenso auch die auf die Gesamtsituation hin generierten Stellgrößen und Regelcharakteristika örtlich bezogen abzuspeichern. Stehen nämlich für einen solchen Datensatz bestimmte dauerhafte oder zumindest zeitlich erstreckte Situationen , die bei Wiederbefahrung wieder auftreten, so können durch die navigierte örtliche Zuordnung derselben, die besagten örtlichen Verkehrsverhältnisse beim Wiederbefahren besser durchfahren werden.

Mit dem ADR-/ANB-System verbunden ist ein Distanzsensor 20, welcher zum einen in den Halbraum noch vorne aber auch, und das nur zusätzlich, auch in den Halbraum nach hinten gerichtet sein kann. Hierbei können auch die seitlichen Richtungen neben dem Fahrzeug durch Sensoren beobachtbar sein.

Insgesamt zeigt die Abbildung auch, daß das gesamte, aus einzelnen Systemen aufgebaute Gesamtsystem durchaus auch modular gestaltbar sein kann. Dies hat dann den Vorteil, daß das System erweiterbar ist. Wie eingangs bereits ausführlich beschrieben wurde, ist die Entwicklung langfristig nicht nur auf eine Fahrerassistenz gerichtet, sondern auf eine zumindest temporäre automatische Verkehrsführung im Sinne eines Autopilotsystems. Dabei soll das Autopilotsystem dennoch nicht nur von Navigationsdaten geleitet sein, sondern auch von weiteren Umgebungsdaten, die sich ad hoc einstellen können, wie schwierige Verkehrssituationen, - Unfälle, oder kurzfristige Baustellen.

Durch die modulare Bauweise ist das System erweiterbar. D.h. künftige neue Systeme könnten dann abhängig vom weiteren Enwicklungsfluß auch nachträglich ergänzt, erweitert werden. Oder das System könnte a priori in verschiedenen Ausstattungsvarianten mit mehr oder weniger Selbstfahrcharakter angeboten werden, je nach Kundenwunsch. Das System wäre dann an die jeweilige Ausstattung individuell anpaßbar.

Die sozusagen funktionelle Grundausstattung, bereits mit einer komfortablen Fahrerassistenz, wäre dann bereits auch ohne Navigationssystem funktionsfähig. Daher ist die besagte Modularität von so großem Vorteil.

## Patentansprüche

1. Verfahren zur elektronischen bzw. elektronisch visuellen Erkennung von Verkehrszeichen, bei welchem die Verkehrszeichen mit einer im Kraftfahrzeug angeordneten Kamera (1) erfaßt und über Mustervergleichsverfahren elektronisch gedeutet und auf eine automatische Geschwindigkeitsregelung des Kraftfahrzeuges einwirken,
indem
- die elektronische Verkehrszeichenerkennung (2) mit einer automatischen Distanzregelung ADR sowie einer automatischen Notbremsbetätigung ANB korreliert wird, derart, dass sowohl ein automatischer Eingriff in die Beschleunigung und Verzögerung des Fahrzeuges gegeben ist, als auch zusätzlich zur Verkehrszeichenerkennung (2) noch verifiziert wird, ob die erkannte Geschwindigkeit aufgrund vorausfahrender Fahrzeuge oder Hindernisse überhaupt ausgeführt werden kann,
- in das Verfahren ein Navigationssystem derart einbezogen wird, dass in die Verkehrszeichenerkennung und die ADR- und ANB-Betriebsweise Navigationsdaten korreliert werden, und die erkannten Verkehrszeichen ortsbezogen abgespeichert werden können,
- das Verfahren adaptiv angelegt ist, so dass erkannte Verkehrszeichen sowie Verkehrssituationen und darauf abgestimmte Steuerbefehle ortsbezogen abgespeichert und bei Wiederbefahrung der Strecke erkannt werden, und zu einer entsprechenden Fahrerassistenz führen.

2. Verfahren nach Anspruch 1, **dadurch gekennzeichnet, dass** die Verkehrszeichen im Kraftfahrzeug angezeigt werden

3. Verfahren nach Anspruch 1, **dadurch gekennzeichnet, dass** das Verfahren um ein Autopilotsystem erweitert wird.

4. Einrichtung zur elektronischen bzw. elektronisch visuellen Erkennung von Verkehrszeichen, bei welcher die Verkehrszeichen mit einer im Kraftfahrzeug angeordneten Kamera (1) erfassbar und in einer Verkehrszeichenauswerteeinheit (2) durch Mustervergleichsverfahren elektronisch auswertbar und wobei in eine automatische Geschwindigkeitsregelung des Kraftfahrzeuges eingreifbar ist, indem
- die Daten der Verkehrszeichenauswerteeinheit (2) mit einer einen Distanzsensor (20) aufweisenden automatischen Distanzregelung ADR sowie einer automatischen Notbremsbetätigung ANB (10) korrelierbar sind, derart, dass sowohl ein automatischer Eingriff in die Beschleunigung und Verzögerung des Fahrzeuges durchführbar, als auch zusätzlich die Ausführbarkeit der durch die Verkehrszeichenauswerteeinheit (2) ermittelten Verkehrszeichen derart verifizierbar ist, ob eine erkannte Geschwindigkeit aufgrund vorausfahrender Fahrzeuge oder erkannter Hindernisse überhaupt ausführbar ist.
- in die Einrichtung ein Navigationssystem (30) derart einbezogen ist, dass zu den Daten der Verkehrszeichenauswerteeinheit (2) und zu den Daten des ADR- und ANB-Systems Navigationsdaten eingebunden sind und die erkannten Verkehrszeichen ortsbezogen abspeicherbar sind,
- durch die Einrichtung erkannte Verkehrszeichen sowie Verkehrssituationen und darauf abgestimmte Steuerbefehle ortsbezogen abgespeichert und bei Wiederbefahrung der Strecke erkennbar sind und zu einer entsprechenden Fahrerassistenz führen.

5. Einrichtung nach Anspruch 4, **dadurch gekennzeichnet, dass** die Verkehrszeichen im Kraftfahrzeug über eine Anzeige darstellbar sind.

6. Einrichtung nach Anspruch 4 oder 5, **dadurch gekennzeichnet, dass** die Verkehrszeichenauswerteeinheit (2) sowie das ADR- / ANB-System (10) mit jeweils einer Speichereinheit (11,12) versehen sind.

7. Einrichtung nach einem der Ansprüche 4 bis 6, **dadurch gekennzeichnet, dass** die einzelnen Komponenten (1, 2, 10, 20, 30) des gesamten Systems jeweils von anderen trennbar und somit modular als erweiterbarer funktioneller Baukasten ausgestaltet sind.

## Claims

1. Method for the electronic, or electronically visual, recognition of road signs, in which the road signs are sensed using a camera (1) which is arranged in the motor vehicle, and are electronically interpreted using pattern comparison methods and act on an automatic speed control of the motor vehicle, in that
- the electronic road sign recognition means (2) is correlated with an automatic distance controller ADR as well as an automatic emergency braking actuation means ANB in such a way that both an automatic intervention in the acceleration and deceleration of the vehicle are provided and in addition to the recognition (2) of the road sign it is also verified whether the detected speed can at all be carried out on the basis of vehicles travelling ahead or obstacles,
- a navigation system is included in the method in such a way that navigation data is correlated in the road sign recognition means and the ADR and ANB modes of operation, and the recognized road signs can be stored on a location-specific basis,
- the method is adaptively configured in such a way that recognized road signs and traffic situations and control instructions which are matched thereto are stored on a location-specific basis and recognized when the route is travelled along again and give rise to a corresponding driver's aid.

2. Method according to Claim 1,
**characterized in that**
the road signs are displayed in the motor vehicle.

3. Method according to Claim 1,
**characterized in that**
the method is expanded with an autopilot system.

4. Device for the electronic, or electronically visual, recognition of road signs, in which the road signs can be sensed using a camera (1) which is arranged in the motor vehicle, and can be evaluated electronically in a road sign evaluation unit (2) by means of pattern comparison methods and in which it is possible to intervene in the automatic speed control of the motor vehicle, in that
- the data of the road sign evaluation unit (2) can be correlated with an automatic distance controller ADR, which has a distance sensor (20), as well as an automatic emergency braking actuation means ANB (10) in such a way that both an automatic intervention in the acceleration and deceleration of the vehicle can be carried out and in addition the possibility of implementing the road signs which are determined by the road sign evaluation unit (2) can be verified to determine whether a detected speed can at all be carried out on the basis of vehicles travelling ahead or detected obstacles,
- a navigation system (30) is included in the device in such a way that navigation data relating to the data of the road sign evaluation unit (2) and to the data of the ADR and ANB system is integrated and the detected road signs can be stored on a location-specific basis,
- road signs and traffic situations which are recognized by the device and control instructions which are matched thereto are stored on a location-specific basis and can be recognized when the route is travelled along again and give rise to a corresponding driver's aid.

5. Device according to Claim 4,
**characterized in that**
the road signs can be represented in the motor vehicle by means of a display.

6. Device according to Claim 4 or 5,
**characterized in that**
the road sign evaluation unit (2) and the ADR/ANB system (10) are each provided with a memory unit (11, 12).

7. Device according to one of Claims 4 to 6,
**characterized in that**
the individual components (1, 2, 10, 20, 30) of the entire system are each configured so as to be capable of being separated from one another, and are thus configured in a modular fashion as an expandable functional kit.

## Revendications

1. Procédé de reconnaissance électronique ou par vision électronique de panneaux de circulation routière avec lequel les panneaux de circulation routière sont détectés avec une caméra (1) disposée dans un véhicule automobile et interprétés de manière électronique par le biais d'un procédé de comparaison avec un modèle et agissent sur une régulation automatique de la vitesse du véhicule automobile en ce que
- la reconnaissance électronique des panneaux de circulation routière (2) est corrélée avec une régulation automatique de la distance ADR ainsi qu'une commande automatique du frein d'urgence ANB de manière à ce qu'il se produise à la fois une intervention automatique dans l'accélération et la décélération du véhicule et qu'en plus de la reconnaissance des panneaux de circulation routière (2), il soit également vérifié si la vitesse identifiée peut effectivement être adoptée du fait des véhicules qui précèdent ou des obstacles,
- un système de navigation est intégré dans le procédé de telle manière que les données de navigation soient corrélées dans la reconnaissance des panneaux de circulation routière et dans le mode de fonctionnement de l'ADR et l'ANB, et les panneaux de circulation routière reconnus peuvent être enregistrés en fonction du lieu,
- le procédé est conçu de manière adaptative de telle façon que les panneaux de circulation routière ainsi que les situations de trafic reconnus et les instructions de commande qui en découlent soient enregistrés en fonction du lieu et reconnus en parcourant une nouvelle fois le trajet et donnent lieu à une assistance en conséquence du conducteur.

2. Procédé selon la revendication 1, **caractérisé en ce que** les panneaux de circulation sont affichés dans le véhicule automobile.

3. Procédé selon la revendication 1, **caractérisé en ce que** le procédé est étendu par un système de pilotage automatique.

4. Dispositif de reconnaissance électronique ou par vision électronique de panneaux de circulation routière avec lequel les panneaux de circulation routière peuvent être détectés avec une caméra (1) disposée dans un véhicule automobile et peuvent être interprétés de manière électronique par le biais d'un procédé de comparaison avec un modèle dans un module de reconnaissance des panneaux de circulation routière (2) et ils peuvent agir sur une régulation automatique de la vitesse du véhicule automobile en ce que
- les données du module de reconnaissance des panneaux de circulation routière (2) peuvent être corrélées avec une régulation automatique de la distance ADR présentant un détecteur de distance (20) ainsi qu'une commande automatique du frein d'urgence ANB (10) de manière à ce qu'il puisse à la fois se produire une intervention automatique dans l'accélération et la décélération du véhicule et qu'en plus, la possibilité de se conformer au panneau de circulation routière déterminé par le module de reconnaissance des panneaux de circulation routière (2) puisse être vérifiée de façon à déterminer si la vitesse identifiée peut effectivement être adoptée du fait des véhicules qui précèdent ou des obstacles,
- un système de navigation (30) est intégré dans le dispositif de telle manière que des données de navigation soient intégrées dans les données du module de reconnaissance des panneaux de circulation routière (2) et dans les données du système ADR et ANB et les panneaux de circulation routière reconnus peuvent être enregistrés en fonction du lieu,
- les panneaux de circulation routière ainsi que les situations de trafic reconnus par le dispositif et les instructions de commande qui en découlent sont enregistrés en fonction du lieu et peuvent être reconnus en parcourant une nouvelle fois le trajet et donnent lieu à une assistance en conséquence du conducteur.

5. Dispositif selon la revendication 4, **caractérisé en ce que** les panneaux de circulation routière peuvent être affichés dans le véhicule automobile par le biais d'un affichage.

6. Dispositif selon la revendication 4 ou 5, **caractérisé en ce que** le module de reconnaissance des panneaux de circulation routière (2) ainsi que le système ADR/ANB (10) sont à chaque fois dotés d'un module de mémorisation (11, 12).

7. Dispositif selon l'une des revendications 4 à 6, **caractérisé en ce que** chacun des composants (1, 2, 10, 20, 30) de l'ensemble du système peuvent à chaque fois être séparés des autres et sont ainsi configurés de manière modulaire sous la forme d'éléments de construction fonctionnels extensibles.
